# EUROPÄISCHE PATENTSCHRIFT

(11) **EP 3 389 887 B1**
(45) Veröffentlichungstag und Bekanntmachung des Hinweises auf die Patenterteilung: **09.02.2022**
(21) Anmeldenummer: 16815842.6
(22) Anmeldetag: 16.12.2016
(51) Int. Cl.: B21C 37/15, B21C 1/22

(54) **VERFAHREN ZUM HERSTELLEN EINES HOCHDRUCKROHRES**
METHOD FOR PRODUCING A HIGH-PRESSURE PIPE
PROCÉDÉ DE FABRICATION D'UN TUBE HAUTE PRESSION

(30) Priorität: 18.12.2015 DE 102015122297
(43) Veröffentlichungstag der Anmeldung: 24.10.2018
(73) Patentinhaber: Sandvik Materials Technology Deutschland GmbH, 40549 Düsseldorf (DE)
(72) Erfinder: RAUFFMANN, Udo, 33824 Werther (DE); FROBÖSE, Thomas, 33775 Versmold (DE); HEDVALL, Christofer, 33615 Bielefeld (DE)
(74) Vertreter: Setréus, Ellen
(86) Internationale Anmeldenummer: PCT/EP2016/081554
(87) Internationale Veröffentlichungsnummer: WO 2017/103189

(56) Entgegenhaltungen:
- EP-A1- 2 738 380
- EP-A2- 0 445 904
- DE-C1- 4 130 524
- GB-A- 2 265 961
- GB-A- 2 312 486
- JP-A- H11 166 464
- JP-A- S58 104 363
- US-A- 4 125 924
- US-A1- 2002 008 133
- US-A1- 2005 251 987

## Beschreibung

Die vorliegende Erfindung betrifft ein Verfahren zum Herstellen eines Rohres.

In vielen technischen Bereichen, wie zum Beispiel in der Einspritztechnik für Verbrennungskraftmaschinen und der chemischen Industrie, werden Rohrleitungen eingesetzt, die mit hohen Drücken beaufschlagt werden und diesen Drücken langfristig standhalten müssen. Dabei wird zwischen einer statischen, d.h. zeitlich und räumlich gleichbleibenden, und einer dynamischen, d.h. zeitlich und/oder räumlich variierenden, Druckbelastung der Rohrleitungen unterschieden. In vielen technischen Anwendungsbereichen werden die druckführenden Bauteile einer zeitlich und räumlich variierenden, teils auch periodisch pulsierenden Druckbelastung ausgesetzt, so dass sie je nach Belastungsstufe deutlich höheren Anforderungen bzgl. der Druckbelastbarkeit unterliegen im Vergleich zu statisch druckbelasteten Bauteilen. Dies führt bei gleicher Bauart dazu, dass dynamisch druckbelastete Bauteile einen schnelleren Verschleiß zur Folge haben und häufiger ausgetauscht werden müssen als dies bei statisch druckbelasteten Bauteilen der Fall ist. Der Grad des Verschleißes hängt dabei von den einzelnen Belastungsfaktoren wie beispielsweise der Frequenz des Druckwechsels und der Differenz zwischen Maximaldruck und Minimaldruck, d.h. dem Druckdelta, ab.

Während die statische Druckbeständigkeit von Bauteilen primär von den mechanischen Eigenschaften wie der Dehngrenze und der Zugfestigkeit des verwendeten Materials abhängt, kommen bei der dynamischen Druckbeständigkeit noch weitere bedeutende Größen hinzu, wie zum Beispiel die Duktilität (Bruchdehnung) des Materials, die Tiefe von bereits vorhandenen Anrissen in der Wand des Bauteils, der Reinheitsgrad, das Mikrogefüge und die Oberflächengüte.

Das Versagen von Rohren und anderen Bauteilen tritt in der Regel infolge eines kritischen Wachstums eines Risses ein, zum Beispiel indem sich ein Riss von der Rohrinnenfläche bis zur Rohraußenfläche fortpflanzt. Dabei kann der Riss durch lokale Spannungskonzentrationen z.B. an Materialdefekten in Form von Gitterfehlern und an rauen Oberflächen durch Spannungsspitzen entstehen, oder bereits vorhandene Anrisse setzen sich infolge der Druckbelastung weiter fort. Demzufolge wird der Verschleiß von dynamisch druckbelasteten Bauteilen unter anderem von dem Wachstum von Rissen pro Druckstoß sowie den Materialeigenschaften bestimmt, wobei eine gute Oberflächenqualität die Wahrscheinlichkeit der Entstehung eines Risses deutlich verringern kann. Zur Erreichung einer hohen Druckbeständigkeit von Rohren und anderen Bauteilen unter dynamischer Druckbelastung werden die Werkstoffe der herzustellenden Rohre und Bauteile dahingehend ausgewählt, dass sie die oben genannten entscheidenden Einflussfaktoren optimieren. Eine nachträgliche Verbesserung der Materialeigenschaften, beispielweise durch eine Autofrettage, kommt ebenfalls häufig in Betracht.

Um Drücken jenseits der 15.000 bar über einen längeren Zeitraum standzuhalten, ist neben einer entsprechenden Auswahl von geeigneten Materialien auch die Wanddicke des Rohres ein maßgeblicher Faktor bei der Herstellung des Rohres. Die Wanddicke eines Rohres berechnet sich durch Subtraktion des Innendurchmessers von dem Außendurchmesser des Rohres. Von einer gleichen Materialzusammensetzung ausgehend nimmt die Druckbeständigkeit des Rohres mit dessen Wanddicke zu, da das Anwachsen eines Risses von der Innenwand des Rohres zur Außenwand des Rohres bei zunehmender Wanddicke länger andauert. Daher kommen häufig dickwandige Rohre in der Hochdrucktechnik zum Einsatz.

Die EP 0 445 904 A2, welche die Basis für den Oberbegriff des Anspruchs 1 bildet, offenbart ein Verfahren zur Herstellung eines metallischen, dickwandigen Hochdruckrohres, bei dem zunächst zwei in den Querschnittsabmessungen unterschiedliche Vorrohre teleskopartig ineinandergesteckt und sodann durch Kaltziehen radial zusammengedrückt werden. Um ein einfaches und kostengünstiges Verfahren zur Herstellung von Hochdruckrohren mit einem D/s-Verhältnis von 2,4 bis 3,6 anzugeben, die eine glatte Innenoberfläche und einen gleichmäßigen Innendurchmesserverlauf sowie eine gute Kaltverformbarkeit aufweisen und die einem pulsierenden Innendruck von ≥1000 bar standhalten können, schlägt die EP 0 445 904 A2 vor, dass die Vorrohre ausgehend von warmgefertigten Luppen über eine Abfolge von Kaltzügen mit Zwischenwärmebehandlungen hergestellt werden, bei der die Wanddickenreduzierung insbesondere des Innenrohres einen hohen Anteil an der jeweiligen Gesamtverformung hat, dass die Vorrohre im kaltverfestigten Zustand mit geringem Spiel ineinandergeschoben werden und dass das so erzeugte Doppelwandrohr zunächst wärmebehandelt und anschließend mindestens einmal kaltgezogen wird und nach dem letzten Kaltzug eine Endwärmebehandlung erfolgt, wobei der nach der ersten Wärmebehandlung des erzeugten Doppelwandrohres folgende erste Kaltzug ein Ziehen mit einem Innenwerkzeug ist.

Die DE 41 30 524 C1 offenbart ein nahtloses Kapillarröhrchen aus Sondermetall, das eine hohe chemische Beständigkeit und, über eine Länge von mindestens 3 m, einen konstanten Innendurchmesser und eine glatte Innenoberfläche aufweist und das Innendrücken von mindestens 500 bar standhält, wobei die Wandstärke des Kapillarröhrchens mindestens dem 1,2-fachen seines Innendurchmessers entspricht und die Wand aus mindestens zwei konzentrisch zueinander verlaufenden Schichten aufgebaut ist, die passgenau aufeinanderliegen, wobei die Wandstärke jeder einzelnen Schicht weniger als das 1,4-fache ihres Innendurchmesser beträgt.

Die GB 2 265 961 A offenbart ein doppelwandiges Kraftstoffeinspritzrohr mit einem Außenrohr und einem aus Metall hergestellten Innenrohr, das in das Außenrohr eingepasst ist, um ein doppelwandiges Rohr zu bilden, das an seinen Endabschnitten mit einem Verbindungskopf versehen ist. Das Außenrohr ist aus Stahl oder Titan und das Innenohr ist aus einem Metall gebildet, das eine hohe Korrosionsbeständigkeit aufweist und eine hohe Festigkeit und das auf den Innenumfang des Außenrohrs über seine gesamte Länge aufgedoppelt ist.

Die US 2005/0251987 A1 offenbart ein Verfahren zum Herstellen eines bimetallischen Rohrs. Das Verfahren umfasst das Einführen eines Innenrohrs in ein Außenrohr und ein Reduzieren des Außenrohrs durch Ziehen des Außenrohrs und des Innenrohrs durch eine Ziehmatrize ohne die Verwendung eines Ziehkerns im Innenohr.

Die JP H11166464 A offenbart ein Verfahren zum Herstellen eines Hochdruckeinspritzrohrs, wobei ein Innenrohr diametral durch einen Rohrdehnprozess zusammengezogen wird, wobei der Prozess aus einem Kernziehen bis die spezifizierten Produktabmessungen erhalten wurden und der Bildung einer Plattierungsschicht auf einer Oberfläche des Innenrohrs besteht. Dieses Innenohr wird in ein Außenrohr eingeführt und nur das Außenrohr wird diametral durch den Rohrdehnprozess, der aus einem Leerziehen besteht, zusammengezogen, sodass die Innenfläche des Außenrohrs in Eingriff mit der Außenfläche des Innenrohrs kommt.

Aus der US 2002/008133 A1 sowie aus der US 4,125,924 sind ein Außenrohr und ein Innenrohr bekannt, die durch Ziehen miteinander verbunden sind.

Aus der EP 2 738 380 A1 ist eine Kraftstoffleitung mit einem Innenstahlrohr und einem Außenstahlrohr bekannt, wobei das Innenstahlrohr kraftschlüssig in dem Außenstahlrohr aufgenommen ist.

Die JP 58104363 A beschreibt ein Verfahren zum Herstellen eines Einspritzrohrs mit Einführen eines von mindestens zwei Rohren mit unterschiedlichem Außendurchmesser in das andere Rohr und dann Sichern der zwei Rohre aneinander durch einen Reduzierschritt.

Es besteht daher ein Bedarf nach einem Verfahren zur Herstellung eines Rohres mit einer verbesserten dynamischen Druckbeständigkeit bzw. einer verbesserten Lebensdauer des Rohres in der Hochdrucktechnik.

Zudem ist es eine Aufgabe der vorliegenden Erfindung, ein Verfahren zur Herstellung eines Rohres bereitzustellen, bei dem ein Außenrohr und ein Innenrohr eine dauerhafte stabile mechanische Verbindung miteinander eingehen.

Eine weitere Aufgabe der vorliegenden Erfindung ist, ein Verfahren zur Herstellung eines Rohres mit hoher Oberflächenqualität der inneren Mantelfläche bereitzustellen.

Zumindest eine der vorgenannten Aufgaben wird durch ein Verfahren zum Herstellen eines Rohres gelöst mit den folgenden Schritten: Bereitstellen eines Innenrohres aus Metall mit einem ersten Innendurchmesser und einem ersten Außendurchmesser, Bereitstellen eines Außenrohres aus Metall mit einem zweiten Innendurchmesser und einem zweiten Außendurchmesser, wobei der erste Außendurchmesser kleiner ist als der zweite Innendurchmesser, Einführen des Innenrohres in das Außenrohr, so dass sich das Innenrohr innerhalb des Außenrohres erstreckt, Ziehen des Innenrohres und des Außenrohres gemeinsam durch eine erste Ziehmatrize, wobei der zweite Innendurchmesser derart verringert wird, dass eine kraftschlüssige Verbindung des Außenrohres mit dem Innenrohr bewirkt wird, wobei der Werkzeugdurchmesser der formgebenden Innenfläche der ersten Ziehmatrize, der zweite Außendurchmesser des Außenrohres, der zweite Innendurchmesser des Außenrohres, der erste Außendurchmesser des Innenrohres und der erste Innendurchmesser des Innenrohres derart gewählt werden, dass der erste Innendurchmesser des Innenrohres bei dem gemeinsamen Ziehen von Außenrohr und sich darin erstreckendem Innenrohr durch die erste Ziehmatrize um höchstens 5% verringert wird, wobei das Innenrohr durch Ziehen einer Luppe aus Metall durch eine zweite Ziehmatrize und über ein Ziehinnenwerkzeug oder durch Walzen einer Luppe aus Metall über einen Walzdorn hergestellt wird und wobei das Ziehinnenwerkzeug oder der Walzdorn aus Stahl mit einer polierten Oberfläche besteht, sodass eine innere Mantelfläche des Innenrohres bei dem Ziehen des Innenrohres über das Ziehinnenwerkzeug oder bei dem Walzen über den Walzdorn prägepoliert wird.

Ein klassisches Verfahren für die Profilumformung von einzelnen Metallrohren ist das Ziehen derartiger Profile durch eine formgebende Ziehmatrize hindurch, welches in der Regel auf einer Ziehbank erfolgt. Ein Werkstück wird dabei am Anfang des Werkstücks von einer Klemmeinrichtung gegriffen und durch die Ziehmatrize gezogen. Während die Ziehmatrize den äußeren Umfang des Werkstücks nach der Umformung definiert, kann zusätzlich beim Umformen von hohlen, länglich ausgedehnten Werkstücken, d.h. insbesondere Rohren und Hohlprofilen, ein zweites Werkzeug neben der Ziehmatrize vorgesehen sein, das innerhalb des umzuformenden Werkstücks angeordnet ist. Ein solches zweites Werkzeug zum Kaltumformen durch Ziehen ist entweder ein fliegender Stopfen oder Ziehkern oder der Stopfen oder Ziehkern ist an einer Stange im Inneren des Werkstücks als Ziehinnenwerkzeug gehaltert.

Das Prinzip einer Ziehmaschine beruht darauf, dass ein umzuformendes Werkstück von der Auslaufseite her durch die Ziehmatrize hindurchgezogen wird, wobei das Werkstück vor dem Umformen einen größeren Umfang aufweist als die Ziehmatrize. Folglich ist es erforderlich, dass auslaufseitig, d.h. in Zug- oder Bewegungsrichtung des Werkstücks hinter der Ziehmatrize, eine Zugkraft in das Werkstück eingeleitet werden kann. Dazu verfügt die Ziehmaschine über eine Zieheinrichtung mit einer relativ zu der Ziehmatrize bewegbar angetriebenen Klemmeinrichtung. Die Klemmeinrichtung greift während dem Ziehen das Werkstück und leitet eine Zugkraft ein.

Gemäß der vorliegenden Erfindung wird ein Innenrohr in ein Außenrohr eingeführt, so dass sich das Innenrohr innerhalb des Außenrohres erstreckt, und Innenrohr und Außenrohr werden gemeinsam durch eine Ziehmatrize einer Ziehbank gezogen. Diese Ziehmatrize wird im Sinne der vorliegenden Erfindung als erste Ziehmatrize bezeichnet. Ein Innenwerkzeug wie beispielsweise ein Stopfen oder ein Ziehkern ist dabei in einer Ausführungsform nicht vorhanden, so dass bei diesem sogenannten Hohlzug lediglich der Außendurchmesser des herzustellenden Rohres reduziert und geglättet wird. Die Wanddicke des herzustellenden Rohres erfährt somit absolut betrachtet eine Verringerung, jedoch ohne dass dabei ein Einfluss auf die Innenfläche des herzustellenden Rohres ausgeübt wird.

Der Ziehprozess durch die Ziehmatrize wirkt sich jedoch nicht nur auf den zweiten Außendurchmesser, d.h. den Außendurchmesser des Außenrohres, sondern auch auf den zweiten Innendurchmesser, d.h. den Innendurchmesser des Außenrohres, in Form einer Reduktion aus. Zudem erfolgt durch die während des Ziehens durch die Ziehmatrize auftretenden Kräfte eine kraftschlüssige Verbindung des Außenrohres mit dem Innenrohr.

Kraftschlüssige Verbindungen entstehen grundsätzlich durch die Übertragung von Kräften, zum Beispiel in Form von Druckkräften oder Reibungskräften. Dabei wird der Zusammenhalt der kraftschlüssigen Verbindung rein durch die wirkende Kraft gewährleistet.

Das erfindungsgemäße Verfahren hat gegenüber den aus dem Stand der Technik bekannten Verfahren einige Vorteile:
(1) Bei dem gemeinsamen Ziehen des Innenrohres und des Außenrohres durch die Ziehmatrize wird eine kraftschlüssige Verbindung zwischen diesen beiden Rohren, welche eine Verschiebung von Innen- und Außenrohr in axialer Richtung verhindert, erzeugt, während in radialer Richtung ein Formschluss vorliegt. Eine dauerhaft stabile und intakte Verbindung zwischen Innenrohr und Außenrohr spielt insbesondere bei einem Einsatz eines derartigen sogenannten Doppelwandrohres in der Hochdrucktechnik eine bedeutende Rolle. Bleibt diese dauerhaft stabile und intakte Verbindung aus, beispielsweise durch einen vorhandenen Luftspalt oder ein Spiel zwischen Innenrohr und Außenrohr oder einem fehlenden Kraftschluss zwischen den beiden Rohren , so kann dies bei einer hohen Druckbehaftung des Doppelwandrohres dazu führen, dass das Innenrohr durch Fortpflanzen von Anrissen deutlich leichter zerbirst.
(2) Die Herstellung eines doppelwandigen Rohres, d.h. eines Rohres bestehend aus einem Außenrohr und einem Innenrohr, gemäß der vorliegenden Erfindung führt dazu, dass das hergestellte Rohr einerseits eine ausreichend große Wanddicke und andererseits zugleich auch eine sehr hohe Oberflächengüte der äußeren Mantelfläche sowie insbesondere der inneren Mantelfläche aufweist. Erst die Erfüllung dieser beiden Erfordernisse ermöglicht einen ausreichend hohen Schutz des herzustellenden Rohres vor dem Zerbersten, wenn das Rohr mit Drücken jenseits der 12.000 bar beaufschlagt wird. Die große Wanddicke, die sich in aus der Summe der Wanddicken des Außenrohres und des Innenrohres nach dem Ziehen durch die erste Ziehmatrize ergibt, erhöht die Druckbeständigkeit des Rohres, da Anrisse auf der inneren Mantelfläche eine größere Strecke durchlaufen müssen, bis sie sich zur äußeren Mantelfläche fortgepflanzt haben. Zudem sorgt die kraftschlüssige Verbindung zwischen Innenrohr und Außenrohr dafür, dass sich diese Risse nicht entlang der Kontaktfläche zwischen Innenrohr und Außenrohr ausdehnen und das Innenrohr schlimmstenfalls zum Zerbersten bringen. Zudem findet das gemeinsame Ziehen des Innenrohres und des Außenrohres in einer Ausführungsform im kalten Zustand des Ausgangsmaterials, d.h. des einlaufenden Rohres, statt. Dadurch wird die Festigkeit sowie die Maß- und Oberflächenqualität der herzustellenden Rohre gegenüber Verfahren, bei denen die zu bearbeitenden Rohre erhitzt werden, gesteigert. Temperaturgradienten infolge einer inhomogenen Erwärmung des Rohres, die zu einer Verzerrung im Metallgefüge des Rohres führen, und Materialdefekte bzw. Gitterfehler, die sich infolge der Temperaturerhöhung ausdehnen, treten bei einer Kaltumformung von Rohren nicht auf. Durch das Kaltumformen in einer Ziehbank können somit höchstpräzise Rohre hoher Oberflächengüte hergestellt werden, dies allerdings nur bis zu einer bestimmten maximalen Wandstärke. Übersteigt die Wandstärke des zu Ziehenden Rohrs diese maximale Wandstärke, so nimmt die Oberflächengüte drastisch ab. Dadurch, dass erfindungsgemäß das Innenrohr und das Außenrohr getrennt voneinander gefertigt werden, bevor sie gemeinsam durch die Ziehmatrize gezogen werden, ist es möglich, die innere Mantelfläche des Innenrohres mit hoher Oberflächengüte herzustellen und trotzdem für das Rohr die für eine Hochdruckfestigkeit erforderliche Wandstärke bereitzustellen. Demzufolge stellt sich das erfindungsgemäße Verfahren durch die Kombination der Erfordernisse einer großen Wandstärke des herzustellenden Rohres einerseits und einer hohen Oberflächengüte der inneren Mantelfläche des herzustellenden Rohres andererseits als besonders geeignet zur Herstellung eines Rohres mit deutlich verbesserter dynamischer Druckbeständigkeit von hohen Drücken dar.

Dabei werden der Werkzeugdurchmesser der formgebenden Innenfläche der ersten Ziehmatrize, der zweite Außendurchmesser des Außenrohres, der zweite Innendurchmesser des Außenrohres, der erste Außendurchmesser des Innenrohres und der erste Innendurchmesser des Innenrohres derart gewählt, dass der erste Innendurchmesser des Innenrohres bei dem gemeinsamen Ziehen von Außenrohr und sich darin erstreckendem Innenrohr durch die erste Ziehmatrize um höchstens 5 % verringert wird.

Dieser obere Grenzwert von 5% ergibt sich dadurch, dass es bei seiner Überschreitung zu einer nicht gewollten Veränderung im Sinne einer Verformung der inneren Mantelfläche des Innenrohres kommt. Dabei weicht die im Querschnitt des Innenrohres betrachtete Kontur der Veränderung an mindestens einer Position in Längsrichtung des Innenrohres um höchstens 5 % von dem durchschnittlichen Wert des ersten Innendurchmessers ab. In einer Ausführungsform weicht die im Querschnitt des Innenrohres betrachtete Kontur der Veränderung an mindestens einer Position in Längsrichtung des Innenrohres um höchstens 3 % von dem durchschnittlichen Wert des ersten Innendurchmessers ab. In einer weiteren Ausführungsform beträgt diese Abweichung maximal 1%.

Eine derartige Anforderung an den Werkzeugdurchmesser sowie an die ersten und zweiten Außendurchmesser und Innendurchmesser des Außenrohres und des Innenrohres sorgt dafür, dass der bei dem gemeinsamen Ziehen von Außenrohr und sich darin erstreckendem Innenrohr durch die erste Ziehmatrize hervorgerufene Kraftschluss nahezu keinen oder im besten Falle gar keinen Einfluss auf die Oberflächenbeschaffenheit der inneren Mantelfläche des Innenrohres hat. Dies ist insofern von Bedeutung, als dass die hohe Oberflächenqualität der inneren Mantelfläche des Innenrohres infolge des Ziehens durch die erste Ziehmatrize nicht negativ beeinträchtigt werden soll. Dabei hat die freie Wählbarkeit der einzelnen oben genannten Durchmesser den Vorteil, dass der durch das Ziehen durch die erste Ziehmatrize hervorgerufene Kraftschluss auswählbar einstellbar ist. Der Kraftschluss kann demnach optimal auf die entsprechenden Materialeigenschaften des Innenrohres und des Außenrohres angepasst werden. Dies wiederum ermöglicht es, die gewünschten Eigenschaften des herzustellenden Doppelwandrohres wie eine dauerhaft stabile und intakte Verbindung zwischen Innenrohr und Außenrohr infolge des Kraftschlusses sowie eine hohe Oberflächenqualität der inneren Mantelfläche des Innenrohres zu erzielen, und damit eine erhöhte dynamische Druckbeständigkeit, dies in Abhängigkeit von den jeweiligen Ausgangsbedingungen des verwendeten Innenrohres und Außenrohres.

Die Kaltverfestigung des Innenrohres kann bei dem erfindungsgemäßen Verfahren bereits bei der Herstellung des Innenrohres erfolgen, d.h. vor dem gemeinsamen Ziehen durch die erste Ziehmatrize. Jedoch kann die Kaltverfestigung des Innenrohres auch erst infolge des gemeinsamen Ziehens des Außenrohres und des Innenrohres durch die erste Ziehmatrize erfolgen oder aber infolge einer Kombination aus der Herstellung des Innenrohres mit dem gemeinsamen Ziehen eintreten. Durch eine Kaltverfestigung werden allgemein sehr enge Maßtoleranzen und gute Oberflächeneigenschaften erzielt im Vergleich zu Umformungen unter Wärmezufuhr. Die nach dem gemeinsamen Ziehen des Außenrohres und Innenrohres durch die erste Ziehmatrize bestehende Kaltverfestigung des Innenrohres hat den Vorteil, dass die Kaltverfestigung zu einem Anstieg der Werkstofffestigkeit führt. Dies lässt sich dadurch erklären, dass sich die Versetzungsdichte durch das plastische Verformen erhöht und die Versetzungen sich infolgedessen bei ihrer Bewegung gegenseitig behindern. Dadurch nimmt die Dehngrenze sowie die Festigkeit zu. Um das Innenrohr nach der Kaltverfestigung weiter zu verformen, wird also eine deutlich größere Spannung benötigt. Dies ist insbesondere von Vorteil, wenn das gemäß des erfindungsgemäßen Verfahrens herzustellende Rohr hohen Drücken ausgesetzt ist, da die Kaltverfestigung des Innenrohres zu einem deutlichen Anstieg der Druckbeständigkeit führt. Somit eignet sich das gemäß der vorliegenden Erfindung herzustellende Rohr für den Einsatz unter hohen Drücken.

In einer Ausführungsform der vorliegenden Erfindung liegt der erste Außendurchmesser des Innenrohres vor dem gemeinsamen Ziehen von Außenrohr und sich darin erstreckendem Innenrohr durch die erste Ziehmatrize in einem Bereich von 6,25 mm bis 6,45 mm und nach dem gemeinsamen Ziehen in einem Bereich von 6,08 mm bis 6,28 mm, wobei der erste Außendurchmesser (D2) des Innenrohres durch das gemeinsame Ziehen verringert wird.

In einer weiteren Ausführungsform der vorliegenden Erfindung weist das herzustellende Rohr nach dem gemeinsamen Ziehen des Innenrohres und des Außenrohres durch die erste Ziehmatrize eine Wanddicke, welche sich aus der Hälfte der Differenz zwischen dem zweiten Außendurchmesser des Außenrohres und dem ersten Innendurchmesser des Innenrohres ergibt, von mindestens einem Drittel des Außendurchmessers des Außenrohres auf. Eine derartige Wanddicke sorgt für eine große Stabilität des herzustellenden Rohres und ermöglicht es somit, das herzustellende Rohr als Hochdruckrohr zu verwenden, so dass es Drücken jenseits der 10.000 bar standhält ohne zu zerbersten.

In einer Ausführungsform der vorliegenden Erfindung ist die Wandstärke des herzustellenden Rohres mindestens so groß wie der Innendurchmesser des Innenrohres.

In einer Ausführungsform des erfindungsgemäßen Verfahrens ist der Werkzeugdurchmesser der formgebenden Innenfläche der ersten Ziehmatrize vor dem gemeinsamen Ziehen des Innenrohres und des Außenrohres durch die erste Ziehmatrize mindestens um 5 % kleiner als der zweite Außendurchmesser des Außenrohres. In einer Ausführungsform ist der Werkzeugdurchmesser der formgebenden Innenfläche der ersten Ziehmatrize vor dem gemeinsamen Ziehen des Innenrohres und des Außenrohres durch die erste Ziehmatrize mindestens um 7 % kleiner als der zweite Außendurchmesser des Außenrohres. In einer weiteren Ausführungsform ist dieser Werkzeugdurchmesser vor dem gemeinsamen Ziehen des Innenrohres und des Außenrohres durch die erste Ziehmatrize mindestens um 10 % kleiner als der zweite Außendurchmesser des Außenrohres.

Damit eine kraftschlüssige Verbindung zwischen Innenrohr und Außenrohr überhaupt entstehen kann, ist es eine notwendige Voraussetzung, dass der Werkzeugdurchmesser der formgebenden Innenfläche der ersten Ziehmatrize vor dem gemeinsamen Ziehen kleiner ist als der zweite Außendurchmesser des Außenrohres. Dabei gibt die prozentuale Abweichung des Werkzeugdurchmessers der formgebenden Innenfläche der ersten Ziehmatrize von dem zweiten Außendurchmesser des Außenrohres ein Maß für den zustande kommenden Kraftschluss an. Unter der Voraussetzung einer konstanten Ziehgeschwindigkeit erfolgt ein umso stärkerer Kraftschluss, je größer diese prozentuale Abweichung ausfällt. Ist die prozentuale Abweichung des Werkzeugdurchmessers der formgebenden Innenfläche der ersten Ziehmatrize zu gering, so erfolgt keine kraftschlüssige Verbindung und auch die Reduktion des zweiten Außendurchmessers des Außenrohres fällt gering aus. Jedoch gibt es in einer Ausführungsform auch eine obere Grenze für die prozentuale Abweichung, die dann erreicht wird, wenn der erste Innendurchmesser des Innenrohres sich um mehr als 5 sowohl in Längsrichtung als auch in Umfangsrichtung des Innenrohres ändert. In einer weiteren Ausführungsform ist diese obere Grenze bereits bei einer entsprechenden Änderung um mehr als 3% erreicht, während in einer weiteren Ausführungsform die obere Grenze sogar bei einer entsprechenden Änderung um mehr als 1% erreicht ist. Eine negative Auswirkung des Kraftschlusses auf die hohe Oberflächenqualität des ersten Innendurchmessers soll dadurch ausgeschlossen werden.

In einer Ausführungsform der vorliegenden Erfindung wird das Innenrohr durch Ziehen einer Luppe aus Metall durch eine zweite Ziehmatrize und über ein Ziehinnenwerkzeug hergestellt. Das Ziehinnenwerkzeug kann entweder ein feststehender Ziehkern oder eine Dornstange sein. Dabei wird die Luppe in einer Ausführungsform einigen Ziehdurchläufen über einen Dorn oder einen losen Ziehstopfen unterzogen, wobei der Rohling des herzustellenden Rohres Luppe genannt wird. Durch das mehrfache Ziehen wird sowohl die Genauigkeit der Abmessungen des Innen- und Außendurchmessers der Luppe, und folglich auch der durch die Differenz zwischen dem Außendurchmesser und dem Innendurchmesser bestimmbaren Wanddicke, als auch die Qualität der Oberfläche von innerer und äußerer Mantelfläche verbessert. Das Einsetzen von Schmiermitteln bzw. Ziehölen zwischen der Luppe und dem Ziehinnenwerkzeug kann die zwischen der zu ziehenden Luppe und dem Ziehinnenwerkzeug auftretende Gleitreibung reduzieren, was zu einer gleichmäßigen Ziehgeschwindigkeit beiträgt. Infolgedessen führt der Einsatz von Ziehölen zusätzlich zu einer geringen Oberflächenrauigkeit des herzustellenden Rohres.

In einer alternativen Ausführungsform der vorliegenden Erfindung wird das Innenrohr in einer Pilgerwalzanlage durch Walzen einer Luppe aus Metall über einen Walzdorn hergestellt. Vorzugsweise handelt es sich bei der Pilgerwalzanlage um eine Kaltpilgerwalzanlage.

Das am weitesten verbreitete Reduzierverfahren für Rohre ist als Kaltpilgern bekannt. Die Luppe wird beim Walzen über einen kalibrierten, d.h. den Innendurchmesser des fertigen Rohres aufweisenden, sich verjüngenden Walzdorn geschoben und dabei von außen von zwei kalibrierten, d.h. den Außendurchmesser des fertigen Rohres definierenden Walzen umfasst und in Längsrichtung über den Walzdorn ausgewalzt. Die Luppe erfährt während des Kaltpilgerns bei einer kleinen Drehung einen schrittweisen Vorschub in Richtung auf den Walzdorn zu und über diesen hinweg, während die Walzen drehend über den Dorn und damit über die Luppe horizontal hin- und herbewegt werden. Die Horizontalbewegung der Walzen wird dabei durch ein Walzgerüst vorgegeben, an dem die Walzen drehbar gelagert sind. Das Walzgerüst wird in bekannten Kaltpilgerwalzanlagen mit Hilfe eines Kurbeltriebs in einer Richtung parallel zum Walzdorn hin- und herbewegt, während die Walzen selbst ihre Drehbewegung durch eine relativ zum Walzgerüst feststehende Zahnstange erhalten, in die fest mit den Walzenachsen verbundene Zahnräder eingreifen.

Das Kaltpilgerwalzverfahren ist zwar aufwendiger als das Gleitziehen einer Luppe durch eine Ziehmatrize, jedoch können durch das Kaltpilgern Rohre mit besonders genauen Abmessungen des Außen- und Innendurchmessers des herzustellenden Rohres erzielt werden. Auch bei dem Kaltpilgerwalzverfahren können Schmiermittel zwischen der Luppe und dem Walzdorn verwendet werden, sogenannte Dornstangenschmierstoffe, um die auftretende Gleitreibung zu verringern und eine glattere Oberfläche der inneren Mantelfläche des herzustellenden Innenrohres zu erzielen.

Dabei besteht das Ziehinnenwerkzeug oder der Walzdorn aus Stahl mit einer polierten Oberfläche, so dass die innere Mantelfläche des Innenrohres, welche vom ersten Innendurchmesser und der Länge des Innenrohres aufgespannt wird, bei dem Ziehen des Innenrohres über das Ziehinnenwerkzeug oder bei dem Walzen über den Walzdorn prägepoliert wird. Im Rahmen des Prägepolierens, auch Glattwalzen genannt, wird ein hochgehärtetes, poliertes Ziehinnenwerkzeug oder ein hochgehärteter, polierter Walzdorn mit großer Kraft auf die Oberfläche des zu bearbeitenden Innenrohres gepresst und dort abgewälzt. Dadurch wird in den Rauheitsspitzen, d.h. Maxima der Oberflächenrauheit, eine hohe Druckspannung erzeugt, die eine plastische Verformung der Rauheitsspitzen bewirkt. Die prägepolierte innere

Mantelfläche des Innenrohres zeichnet sich durch eine geringe Oberflächenrauheit, eine höhere Maßgenauigkeit und eine Zunahme der Härte, d.h. eine verfestigte Oberfläche aus. Diese Eigenschaften sind für die Beständigkeit von hohen Drücken jenseits der 15.000 bar von großer Bedeutung, da diese Eigenschaften ein Entstehen sowie ein Wachstum von Anrissen deutlich verringern.

In einer Ausführungsform des erfindungsgemäßen Verfahrens ist ein Material zumindest des Innenrohres oder des Außenrohres aus einer Gruppe bestehend aus einem unlegierten Stahl, einem niedriglegierten Stahl und einem hochlegierten Stahl oder einer Kombination davon ausgewählt. In einer Ausführungsform handelt es sich bei dem Material um einen hochlegierten Stahl. In einer weiteren Ausführungsform ist zumindest das Innenrohr oder das Außenrohr aus HP 160 hergestellt.

In der Hochdrucktechnik werden unterschiedliche metallische Werkstoffe für die Herstellung von Rohren und anderen Bauteilen verwendet. Dabei handelt es sich hauptsächlich um unlegierte, niedriglegierte und hochlegierte Stähle. Besonders hohe dynamische Druckbeständigkeit wird bei Rohren oder anderen Bauteilen aus hochlegiertem Stahl erreicht, welche kaltverfestigt oder vergütet und anschließend prägepoliert wurden. HP 160 ist ein hochfester stickstofflegierter austenitischer Edelstahl, der sich gegenüber den Standardwerkstoffen in einer verbesserten Korrosionsbeständigkeit, einem hohen Reinheitsgrad, einer guten Umformbarkeit und der Möglichkeit, diesen Werkstoff bis zu 12.000 bar autofrettieren zu können, auszeichnet. Aufgrund seiner chemischen Zusammensetzung und seiner hohen Reinheit besitzt HP 160 eine sehr gute Beständigkeit gegen interkristalline Korrosion und Wasserstoffversprödung. Der hohe Molybdängehalt bewirkt eine gute Beständigkeit gegen Lochfraß und Kontaktkorrosion sowie Spannungsrisskorrosion. Demnach ist HP 160 ein bevorzugter Werkstoff für die Herstellung von Rohren mit hoher dynamischer Druckbeständigkeit.

In einer Ausführungsform der vorliegenden Erfindung ist das Innenrohr korrosionsbeständig. Dieses Merkmal ist für den Einsatz in der Hochdrucktechnik vorteilhaft, da eine einsetzende Korrosion, d.h. eine fortschreitende Zersetzung, des Innenrohres zu einer Beeinträchtigung von dessen Druckbeständigkeit führen würde.

In einer Ausführungsform der vorliegenden Erfindung bestehen das Innenrohr und das Außenrohr aus dem gleichen Werkstoff. Dies führt dazu, dass Innenrohr und Außenrohr infolge der durch das gemeinsame Ziehen durch die erste Ziehmatrize bewirkten kraftschlüssigen Verbindung des Innenrohres mit dem Außenrohr eine sehr stabile Verbindung miteinander eingehen. Unter mikroskopischer Betrachtung liegt sowohl im Innenrohr als auch im Außenrohr im Fall des Bestehens aus dem gleichen Werkstoff die gleiche Gitterstruktur im Metallgefüge vor, so dass sich die Gitterstrukturen an der äußeren Mantelfläche des Innenrohres und an der inneren Mantelfläche des Außenrohres sehr gut miteinander kombinieren lassen.

In einer alternativen Ausführungsform der vorliegenden Erfindung bestehen das Innenrohr und das Außenrohr aus unterschiedlichen Werkstoffen. Dies hat den Vorteil, dass je nach Bedarf der technischen Anwendung unterschiedliche Materialeigenschaften an der Innenfläche und an der Außenfläche des herzustellenden Rohres vorliegen können. Um hohen Drücken unter dynamischer Druckbelastung standhalten zu können, sollte das Innenrohr in einer Ausführungsform aus höchst druckbeständigen und korrosionsbeständigen Werkstoffen wie beispielsweise HP 160 bestehen. Ist das Innenrohr aus einem höchst druckbeständigen und korrosionsbeständigen Werkstoff hergestellt, so kann das Außenrohr aus einem im Vergleich zu dem Innenrohr weniger druckbeständigen und korrosionsbeständigen Werkstoff hergestellt werden. Dies ermöglicht eine Einsparung von Herstellungskosten bei einer dennoch sehr hohen Qualität des herzustellenden Rohres.

Weitere Vorteile, Merkmale und Anwendungsmöglichkeiten der vorliegenden Erfindung werden anhand der folgenden Beschreibung einer Ausführungsform und der dazugehörigen Figur deutlich.
Figur 1a zeigt eine schematische Querschnittsansicht eines Außenrohres und eines sich in dem Außenrohr erstreckenden Innenrohr vor dem gemeinsamen Ziehen durch eine erste Ziehmatrize gemäß einer Ausführungsform des erfindungsgemäßen Verfahrens.
Figur 1b zeigt eine schematische Querschnittsansicht eines hergestellten Rohres nachdem gemeinsamen Ziehen durch eine erste Ziehmatrize gemäß einer Ausführungsform des erfindungsgemäßen Verfahrens.
Figur 2 stellt eine schematische Schnittansicht in Längsrichtung durch eine Ziehbank zum Herstellen eines Rohres gemäß einer Ausführungsform des erfindungsgemäßen Verfahrens dar.
Figur 3 zeigt eine schematische Schnittansicht in Längsrichtung durch eine Ziehbank zum Herstellen eines Innenrohres gemäß einer Ausführungsform des erfindungsgemäßen Verfahrens.

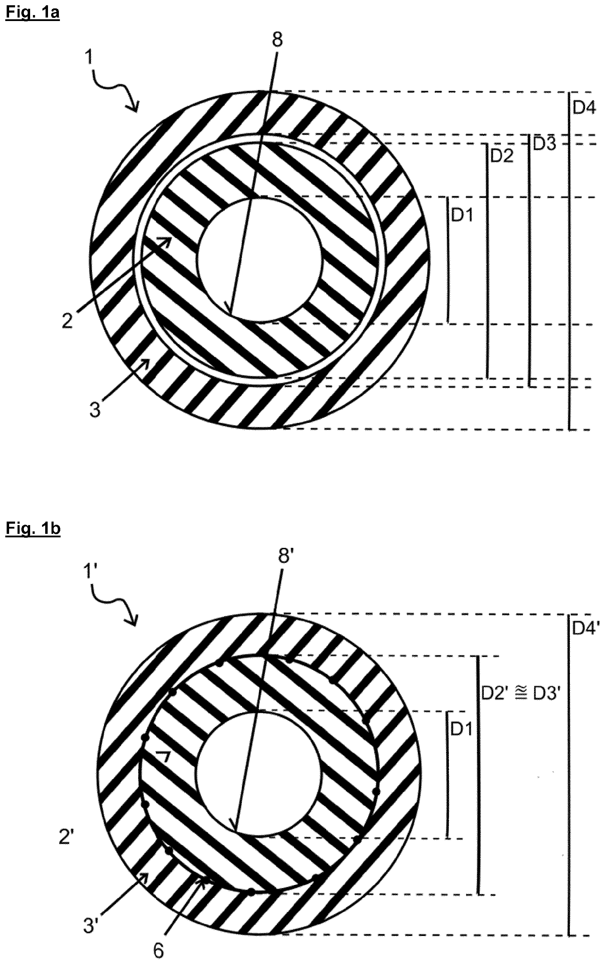

In Figur 1a ist eine schematische Querschnittsansicht eines Außenrohres 3 und eines sich in dem Außenrohr 3 erstreckenden Innenrohres 2 dargestellt. Das Innenrohr 2 weist einen ersten Innendurchmesser D1 und einen ersten Außendurchmesser D2 auf, während das Außenrohr 3 einen zweiten Innendurchmesser D3 und einen zweiten Außendurchmesser D4 aufweist, wobei der erste Außendurchmesser D2 kleiner ist als der zweite Innendurchmesser D3.

Das Innenrohr 2 besteht aus dem Werkstoff HP 160, ein hochfester stickstofflegierter austenitischer Edelstahl von hoher Korrosionsbeständigkeit. Das Innenrohr 2 ist hierbei in einer Pilgerwalzanlage durch Walzen einer Luppe aus Metall über einen Walzdorn hergestellt worden. Zu dem Ausführen der Walzbewegung befinden sich zwei auf Wellen drehbar gelagerte Arbeitswalzen in einem Walzgerüst, welches eine Hin- und Herbewegung ausführt. Die Arbeitswalzen werden dabei durch die Hin- und Herbewegung des Walzgerüsts angetrieben. Die sich zwischen den sich drehenden Arbeitswalzen angeordnete Luppe wird über einen sich verjüngenden Walzdorn gewalzt und erfährt einen stückweisen Vorschub nach jedem einzelnen Walzprozess.

Das auf diese Weise hergestellte Innenrohr 2 zeichnet sich durch sehr präzise bestimmbare Maße des ersten Innen- (D1) und Außendurchmessers (D2) sowie insbesondere durch eine hohe Oberflächengüte an seiner inneren Mantelfläche 8 aus. Die Oberflächengüte der inneren Mantelfläche 8 des Innenrohres 2 ist zudem dadurch verbessert worden, dass der Walzdorn aus hochwertigem Stahl mit einer polierten Oberfläche besteht und somit die innere Mantelfläche 8 des Innenrohres 2 beim Auswalzen prägepoliert wurde. Dies hat zur Folge, dass auf der inneren Mantelfläche 8 vorhandene Risse eine maximale Tiefe von lediglich 7 µm haben.

Das in Figur 1a dargestellte Innenrohr 2 weist einen ersten Innendurchmesser D1 von 1,6 mm und einen ersten Außendurchmesser D2 von 6,3 mm auf.

Das Außenrohr 3 in Figur 1a besteht wie das Innenrohr 2 auch aus dem Werkstoff HP 160 und zeichnet sich dadurch ebenfalls durch eine hohe Korrosionsbeständigkeit sowie Druckbeständigkeit aus. Die Herstellung des Außenrohres 3 erfolgte ebenso in einer Kaltpilgerwalzanlage mit prägepoliertem Walzdorn, so dass auch das Außenrohr 3 eine hohe Oberflächenqualität und sehr präzise angefertigte Maße bezüglich des zweiten Innen- (D3) und Außendurchmessers (D4) aufweist.

Der zweite Innendurchmesser D3 des in Figur 1a gezeigten Außenrohres 3 beträgt 6,6 mm und der zweite Außendurchmesser D4 des Außenrohres beträgt 15,9 mm. Dabei ist der zweite Innendurchmesser D3 des Außenrohres 3 derart gestaltet, dass sich das Innenrohr 2 in dem Außenrohr 3 der Länge nach erstrecken kann, wie aus der Querschnittszeichnung der Figur 1a hervorgeht.

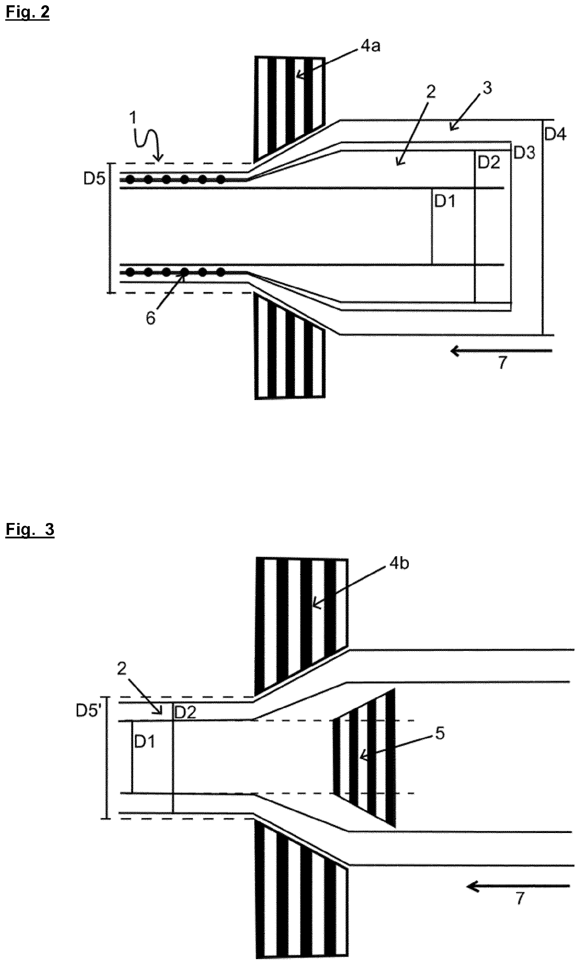

Figur 1b zeigt die gleiche schematische Querschnittsansicht eines Außenrohres 3' und eines sich in dem Außenrohr 3' erstreckenden Innenrohr 2' wie Figur 1a, jedoch im Gegensatz zu Figur 1a nachdem das Außenrohr 3 bereits gemeinsam mit dem Innenrohr 2 durch eine erste Ziehmatrize 4a aus Figur 2 gezogen wurde. Durch das gemeinsame Ziehen durch die erste Ziehmatrize 4a sind das Innenrohr 2' und das Außenrohr 3' eine sehr stabile kraftschlüssige Verbindung 6 miteinander eingegangen.

Diese kraftschlüssige Verbindung kommt insbesondere durch eine geeignete Wahl der Abmessungen der ersten Ziehmatrize 4a sowie des Außenrohres 3 und des Innenrohres 2 zustande. Der Werkzeugdurchmesser D5 der formgebenden Innenfläche der ersten Ziehmatrize 4a bei der in Figur 2 gezeigten Ziehmatrize beträgt 14,5 mm und ist dabei derart gewählt, dass die durch das gemeinsame Ziehen des Außenrohres 3 und des Innenrohres 2 durch die erste Ziehmatrize 4a erzeugte kraftschlüssige Verbindung 6 des Außenrohres 3 mit dem Innenrohr 2 ausreichend groß ist, um für eine dauerhaft stabile Verbindung zwischen Innenrohr 2' und Außenrohr 3' zu sorgen. Jedoch sollte der erzeugte Kraftschluss 6 einen bestimmten oberen Wert nicht überschreiten, damit der erste Innendurchmesser D1 des Innenrohres 2' dadurch keine negativen Auswirkungen in Form einer Veränderung der inneren Mantelfläche des Innenrohres 2' erfährt.

In der in Figur 1b dargestellten Querschnittsansicht hatte der durch das Ziehen erfolgte Kraftschluss zwischen Innenrohr 2' und Außenrohr 3' keinen Einfluss auf den ersten Innendurchmesser D1 des Innenrohres 2 und damit auf die Oberflächenqualität der inneren Mantelfläche 8' des Innenrohres 2', so dass der erste Innendurchmesser D1 des Innenrohres 2' nach erfolgtem Kaltumformen in der Ziehbank mit der ersten Ziehmatrize einen Wert von nach wie vor 1,6 mm aufweist. Der erste Außendurchmesser D2' wurde hingegen durch das gemeinsame Ziehen des Außenrohres 3 und des Innenrohres 2 von einem ursprünglichen Wert von 6,3 mm auf einen neuen Wert von 6,15 mm verringert. Aufgrund der kraftschlüssigen Verbindung 6 zwischen der äußeren Mantelfläche des Innenrohres 2' und der inneren Mantelfläche des Außenrohres 3' beträgt auch der zweite Innendurchmesser D3' des Außenrohres 3' nach dem gemeinsamen Ziehen des Außenrohres 3 und des Innenrohres 2 zumindest nahezu 6,15 mm. Der zweite Außendurchmesser D4' des Außenrohres 3' weist nach dem gemeinsamen Ziehen des Außenrohres 3 und des Innenrohres 2 den gleichen Wert wie der Werkzeugdurchmesser D5 der ersten Ziehmatrize 4a auf, was in der Figur 1b einem Wert von 14,5 mm entspricht. Die Wanddicke des hergestellten Rohres 1, dessen Querschnitt in Figur 1b dargestellt ist, entspricht daher 12,9 mm.

Figur 2 zeigt eine schematische Schnittansicht in Längsrichtung durch eine Ziehbank zum Herstellen eines Rohrs 1 gemäß einer Ausführungsform des erfindungsgemäßen Verfahrens. Bei dem Ziehen durch die in Figur 2 dargestellte Ziehbank wird ein Außenrohr 3 und ein sich darin erstreckendes Innenrohr 2 gemäß der Querschnittszeichnung in Figur 1a gemeinsam durch eine erste Ziehmatrize 4a gezogen, wobei die Zugrichtung 7 in Figur 2 durch die Pfeilrichtung vorgegeben ist. Wegen des Fehlens eines Innenwerkzeugs wird bei diesem sogenannten Hohlzug lediglich der Außendurchmesser des herzustellenden Rohres 1 reduziert und geglättet. Die Wanddicke des herzustellenden Rohrs 1 erfährt somit absolut betrachtet eine Verringerung, jedoch ohne dass dabei ein Einfluss auf die innere Mantelfläche des herzustellenden Rohres ausgeübt wird.

Bei dem gemeinsamen Ziehen des Außenrohres 3 und des Innenrohres 2 durch die erste Ziehmatrize 4a erfolgt eine kombinierte Kraftausübung bestehend aus einer linear wirkenden Zugkraft und einer radial wirkenden Druckkraft auf das Außenrohr 3 mit dem sich darin erstreckenden Innenrohr 2. Dabei ist der Werkzeugdurchmesser D5 der ersten Ziehmatrize 4a derart gewählt, dass der infolge der kombinierten Kraftausübung zustande kommende Kraftschluss 6 zwischen der äußeren Mantelfläche des Innenrohres 2 und der inneren Mantelfläche des Außenrohres 3 ausreichend groß ist, so dass eine dauerhaft stabile Verbindung dieser beiden Flächen ermöglicht wird. Innenrohr 2 und Außenrohr 3 bilden nach dem gemeinsamen Ziehen demnach eine derart feste Verbindung, dass ein sogenanntes Doppelwandrohr entsteht, wie auf der linken Seite der Figur 2 mit dem Bezugszeichen 1 gezeigt. Zudem ist das Innenrohr 2' nach dem gemeinsamen Ziehen kaltverfestigt und weist eine Zugfestigkeit von 1100 N auf.

Jedoch wird ein oberer Grenzwert des Kraftschlusses dabei nicht überschritten, um negative Einflüsse des Kraftschlusses auf die Oberflächenbeschaffenheit der inneren Mantelfläche 8' des Innenrohres 2' auszuschließen, so dass diese nahezu unverändert bzw. unverändert bleibt. Die Innenfläche und auch der Innendurchmesser des herzustellenden Rohres 1 erfahren somit durch den Ziehvorgang gemäß der vorliegenden Erfindung nahezu keine oder keine Veränderung.

Figur 2 macht zudem klar erkennbar, dass sich der erste Innendurchmesser D1 des Innenrohres 2 infolge des gemeinsamen Ziehens des Außenrohres und des Innenrohres durch die erste Ziehmatrize 4a nicht verändert, während der erste Außendurchmesser D2 des Innenrohres 2, der zweite Innendurchmesser D3 des Außenrohres 3 und der zweite Außendurchmesser D4 des Außenrohres 3 jeweils eine unterschiedlich stark ausgeprägte Reduktion durch das gemeinsame Ziehen erfahren haben. Bedingt durch die eingetretene kraftschlüssige Verbindung 6 zwischen der äußeren Mantelfläche des Innenrohres 2 und der inneren Mantelfläche des Außenrohres 3 sind der erste Außendurchmesser D2 des Innenrohres und der zweite Innendurchmesser D3 des Außenrohres annähernd gleich groß.

Figur 3 zeigt eine schematische Schnittansicht in Längsrichtung durch eine Ausführungsform einer Ziehbank zum Herstellen eines Innenrohres 2 gemäß des erfindungsgemäßen Verfahrens. Die Ziehbank in Figur 3 weist neben einer zweiten Ziehmatrize 4b zusätzlich einen mittels einer nicht in Figur 3 abgebildeten Kernstange fixiertes Ziehinnenwerkzeug 5 auf, über den das umzuformende Innenrohr 2 in Zugrichtung 7 entlang der abgebildeten Pfeilrichtung gezogen wird. Auf diese Weise werden sowohl der Außendurchmesser D2 des Innenrohres 2 als auch der Innendurchmesser D1 des Innenrohres 2 sowie die Wanddicke des Innenrohres 2 reduziert und in einen engen Toleranzbereich gebracht.

Im Gegensatz zu der in Figur 2 dargestellten Ziehbank erfolgt bei der Herstellung des Innenrohres 2 durch das Vorhandensein eines Ziehinnenwerkzeugs 5, nämlich als Ziehkern, ein präzises Anpassen des Innendurchmessers D1 des Innenrohres 2 auf den gewünschten Wert. Dabei ergibt sich der Wert des Innendurchmessers D1 des Innenrohres 2 im Wesentlichen aus dem Durchmesser des Ziehinnenwerkzeugs 5. Zudem wird durch das Gleiten des Rohlings über das Ziehinnenwerkzeug 5 eine Glättung der inneren Manteloberfläche des Innenrohres 2 erreicht. Die Anpassung des Außendurchmessers D2 des Innenrohres 2 auf den gewünschten Wert wird durch den Durchmesser D5' der zweiten Ziehmatrize 4b bestimmt, welche ebenfalls eine Glättung der äußeren Mantelfläche des Innenrohres 2 bewirkt. Die Glättung wird durch die Verwendung eines Schmiermittels bzw. eines Ziehöls noch verbessert, welche die zwischen dem zu ziehenden Rohr und den jeweiligen Ziehwerkzeugen auftretende Gleitreibung verringert und dadurch zu einer gleichmäßigen Ziehgeschwindigkeit führt.

Der in Figur 3 gezeigte Ziehkern 5 weist einen maximalen Durchmesser von 1,6 mm auf, während der Durchmesser der zweiten Ziehmatrize 4b 6,3 mm beträgt. Demnach weist das in Figur 3 auf der linken Seite dargestellte Innenrohr 2 einen ersten Innendurchmesser D1 von annähernd 1,6 mm und einen ersten Außendurchmesser D2 von annähernd 6,3 mm auf.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- D1: erster Innendurchmesser
- D2: erster Außendurchmesser
- D3: zweiter Innendurchmesser
- D4: zweiter Außendurchmesser
- D5: Durchmesser der ersten Ziehmatrize
- D5': Durchmesser der zweiten Ziehmatrize

- 1: Rohr
- 2, 2': Innenrohr
- 3, 3': Außenrohr
- 4a: erste Ziehmatrize
- 4b: zweite Ziehmatrize
- 5: Ziehinnenwerkzeug
- 6: kraftschlüssige Verbindung
- 7: Zugrichtung
- 8, 8': innere Mantelfläche des Innenrohres

## Patentansprüche

1. Verfahren zum Herstellen eines Rohres (1) mit den folgenden Schritten:
Bereitstellen eines Innenrohres (2) aus Metall mit einem ersten Innendurchmesser (D1) und einem ersten Außendurchmesser (D2),
Bereitstellen eines Außenrohres (3) aus Metall mit einem zweiten Innendurchmesser (D3) und einem zweiten Außendurchmesser (D4),
wobei der erste Außendurchmesser (D2) kleiner ist als der zweite Innendurchmesser (D3),
Einführen des Innenrohres (2) in das Außenrohr (3), so dass sich das Innenrohr (2) innerhalb des Außenrohres (3) erstreckt,
Ziehen des Innenrohres (2) und des Außenrohres (3) gemeinsam durch eine erste Ziehmatrize (4a),
wobei der zweite Innendurchmesser (D3) derart verringert wird, dass eine kraft-
schlüssige Verbindung (6) des Außenrohres (3) mit dem Innenrohr (2) bewirkt wird,
**dadurch gekennzeichnet, dass**
der Werkzeugdurchmesser (D5) der formgebenden Innenfläche der ersten Ziehmatrize (4a), der zweite Außendurchmesser (D4) des Außenrohres (3), der zweite Innendurchmesser (D3) des Außenrohres (3), der erste Außendurchmesser (D2) des Innenrohres (2) und der erste Innendurchmesser (D1) des Innenrohres (2) derart gewählt werden, dass der erste Innendurchmesser (D1) des Innenrohres (2) bei dem gemeinsamen Ziehen von Außenrohr (3) und sich darin erstreckendem Innenrohr (3) durch die erste Ziehmatrize (4a) um höchstens 5 % verringert wird,
wobei das Innenrohr (2) durch Ziehen einer Luppe aus Metall durch eine zweite Ziehmatrize (4b) und über ein Ziehinnenwerkzeug (5) oder durch Walzen einer Luppe aus Metall über einen Walzdorn hergestellt wird und
wobei das Ziehinnenwerkzeug (5) oder der Walzdorn aus Stahl mit einer polierten Oberfläche besteht, so dass eine innere Mantelfläche des Innenrohres (2) bei dem Ziehen des Innenrohres (2) über das Ziehinnenwerkzeug (5) oder bei dem Walzen über den Walzdorn prägepoliert wird.

2. Verfahren nach dem vorhergehenden Anspruch, **dadurch gekennzeichnet, dass** das herzustellende Rohr (1) nach dem gemeinsamen Ziehen des Innenrohres (2) und des Außenrohres (3) durch die erste Ziehmatrize (4a) eine Wanddicke, welche sich aus der Hälfte der Differenz zwischen dem zweiten Außendurchmesser (D4) des Außenrohres (3) und dem ersten Innendurchmesser (D1) des Innenrohres (2) ergibt, von mindestens einem Drittel des Außendurchmessers (D4) des Außenrohres (3) aufweist.

3. Verfahren nach einem der vorhergehenden Ansprüche, **dadurch gekennzeichnet, dass** der Werkzeugdurchmesser (D5) der formgebenden Innenfläche der ersten Ziehmatrize (4a) vor dem gemeinsamen Ziehen des Innenrohres (2) und des Außenrohres (3) durch die erste Ziehmatrize (4a) mindestens um 5 % kleiner ist als der zweite Außendurchmesser (D4) des Außenrohres (3) vor dem Ziehen.

4. Verfahren nach einem der vorhergehenden Ansprüche, **dadurch gekennzeichnet, dass** ein Material zumindest des Innenrohres (2) oder des Außenrohr (3) ausgewählt ist aus einer Gruppe bestehend aus einem unlegierten Stahl, einem niedriglegierten Stahl und einem hochlegierten Stahl oder einer Kombination davon.

5. Verfahren nach einem der vorhergehenden Ansprüche, **dadurch gekennzeichnet, dass** der erste Außendurchmesser (D2) des Innenrohres (2) vor dem gemeinsamen Ziehen von Außenrohr (3) und sich darin erstreckendem Innenrohr (2) durch die erste Ziehmatrize (4a) in einem Bereich von 6,25 mm bis 6,45 mm und nach dem gemeinsamen Ziehen in einem Bereich von 6,08 mm bis 6,28 mm liegt, wobei der erste Außendurchmesser (D2) des Innenrohres (2) durch das gemeinsame Ziehen verringert wird.

6. Verfahren nach einem der vorhergehenden Ansprüche, **dadurch gekennzeichnet, dass** das Innenrohr (2) und das Außenrohr (3) aus dem gleichen Werkstoff bestehen.

7. Verfahren nach einem der vorhergehenden Ansprüche, **dadurch gekennzeichnet, dass** das Innenrohr (2) und das Außenrohr (3) aus unterschiedlichen Werkstoffen bestehen.

## Claims

1. Method for producing a pipe (1) comprising the following steps:
providing an inner pipe (2) made of metal having a first inner diameter (D1) and a first outer diameter (D2),
providing an outer pipe (3) made of metal with a second inner diameter (D3) and a second outer diameter (D4),
wherein the first outer diameter (D2) is smaller than the second inner diameter (D3),
inserting the inner pipe (2) into the outer pipe (3) so that the inner pipe (2) extends inside the outer pipe (3),
joint drawing of the inner pipe (2) and the outer pipe (3) through a first drawing die (4a),
wherein the second inner diameter (D3) is reduced such that a force-fitting connection (6) of the outer pipe (3) and the inner pipe (2) is established,
**characterised in that**
the tool diameter (D5) of the forming inner surface of the first drawing die (4a), the second outer diameter (D4) of the outer pipe (3), the second inner diameter (D3) of the outer pipe (3), the first outer diameter (D2) of the inner pipe (2) and the first inner diameter (D1) of the inner pipe (2) are selected such that, during the joint drawing of the outer pipe (3) and inner pipe (3) extending therein through the first drawing die (4a), the first inner diameter (D1) of the inner pipe (2) is reduced by at most 5%,
wherein the inner pipe (2) is manufactured by drawing a hollow blank of metal through a second drawing die (4b) and over an inner die tool (5) or by rolling a hollow blank of metal over a mandrel, and
wherein the inner die tool (5) or the mandrel is made of steel with a polished surface, so that an inner shell surface of the inner pipe (2) is burnished when drawing the inner pipe (2) over the inner die tool (5) or rolling over the mandrel.

2. Method according to the preceding claim, **characterised in that**, after the joint drawing of the inner pipe (2) and the outer pipe (3) through the first drawing die (4a), the pipe (1) to be manufactured has a wall thickness, which is defined by half the difference between the second outer diameter (D4) of the outer pipe (3) and the first inner diameter (D1) of the inner pipe (2), of at least one third of the outer diameter (D4) of the outer pipe (3).

3. Method according to any of the preceding claims, **characterised in that** the tool diameter (D5) of the forming inner surface of the first drawing die (4a) prior to the joint drawing of the inner pipe (2) and the outer pipe (3) through the first drawing die (4a) is at least 5% smaller than the second outer diameter (D4) of the outer pipe (3) prior to drawing.

4. Method according to any of the preceding claims, **characterised in that** a material of at least the inner pipe (2) or the outer pipe (3) is selected from a group consisting of an unalloyed steel, a low alloy steel and a high-alloy steel or a combination thereof.

5. Method according to any of the preceding claims, **characterised in that**, prior to the joint drawing of the outer pipe (3) and the inner pipe (2) extending therein through the first drawing die (4a), the first outer diameter (D2) of the inner pipe (2) is in a range from 6.25 mm to 6.45 mm, and after the joint drawing is in a range from 6.08 mm to 6.28 mm, wherein the first outer diameter (D2) of the inner pipe (2) is reduced by the joint drawing.

6. Method according to any of the preceding claims, **characterised in that** the inner pipe (2) and the outer pipe (3) are made from the same material.

7. Method according to any of the preceding claims, **characterised in that** the inner pipe (2) and the outer pipe (3) are made of different materials.

## Revendications

1. Procédé de fabrication d'un tube (1) comprenant les étapes suivantes :
la fourniture d'un tube intérieur (2) en métal avec un premier diamètre intérieur (D1) et un premier diamètre extérieur (D2),
la fourniture d'un tube extérieur (3) en métal avec un second diamètre intérieur (D3) et un second diamètre extérieur (D4),
dans lequel le premier diamètre extérieur (D2) est inférieur au second diamètre intérieur (D3),
l'insertion du tube intérieur (2) dans le tube extérieur (3) de manière à ce que le tube intérieur (2) s'étende à l'intérieur du tube extérieur (3),
l'étirage du tube intérieur (2) et du tube extérieur (3) conjointement à travers une première matrice d'étirage (4a),
dans lequel le second diamètre intérieur (D3) est réduit de telle sorte qu'une liaison de force (6) du tube extérieur (3) est produite avec le tube intérieur (2),
**caractérisé en ce que**
le diamètre d'outil (D5) de la surface intérieure de façonnage de la première matrice d'étirage (4a), le second diamètre extérieur (D4) du tube extérieur (3), le second diamètre intérieur (D3) du tube extérieur (3), le premier diamètre extérieur (D2) du tube intérieur (2) et le premier diamètre intérieur (D1) du tube intérieur (2) sont choisis de telle sorte que le premier diamètre intérieur (D1) du tube intérieur (2) est réduit de 5 % maximum lors de l'étirage conjoint du tube extérieur (3) et du tube intérieur (3) s'étendant à l'intérieur de celui-ci à travers la première matrice d'étirage (4a),
dans lequel le tube intérieur (2) est fabriqué en étirant un lopin en métal à travers une seconde matrice d'étirage (4b) et via un outil d'étirage intérieur (5) ou en laminant un lopin en métal via un mandrin de laminage et
dans lequel l'outil d'étirage intérieur (5) ou le mandrin de laminage est composé d'acier avec une surface polie, de sorte qu'une surface d'enveloppe intérieure du tube intérieur (2) est brunie lors de l'étirage du tube intérieur (2) via l'outil d'étirage intérieur (5) ou lors du laminage via le mandrin de laminage.

2. Procédé selon la revendication précédente, **caractérisé en ce que**, après l'étirage conjoint du tube intérieur (2) et du tube extérieur (3) à travers la première matrice d'étirage (4a), le tube à fabriquer (1) présente une épaisseur de paroi d'au moins un tiers du diamètre extérieur (D4) du tube extérieur (3), qui résulte de la moitié de la différence entre le second diamètre extérieur (D4) du tube extérieur (3) et le premier diamètre intérieur (D1) du tube intérieur (2).

3. Procédé selon l'une quelconque des revendications précédentes, **caractérisé en ce que**, avant l'étirage conjoint du tube intérieur (2) et du tube extérieur (3) à travers la première matrice d'étirage (4a), le diamètre d'outil (D5) de la surface intérieure de façonnage de la première matrice d'étirage (4a) est inférieur d'au moins 5 % au second diamètre extérieur (D4) du tube extérieur (3) avant l'étirage.

4. Procédé selon l'une quelconque des revendications précédentes, **caractérisé en ce qu'**un matériau d'au moins le tube intérieur (2) ou le tube extérieur (3) est choisi parmi un groupe consistant en un acier non allié, un acier faiblement allié et un acier fortement allié ou une combinaison de ceux-ci.

5. Procédé selon l'une quelconque des revendications précédentes, **caractérisé en ce que**, avant l'étirage conjoint du tube extérieur (3) et du tube intérieur (2) s'étendant à l'intérieur de celui-ci à travers la première matrice d'étirage (4a), le premier diamètre extérieur (D2) du tube intérieur (2) se situe dans une plage allant de 6,25 mm à 6,45 mm et, après l'étirage conjoint, dans une plage allant de 6,08 mm à 6,28 mm, dans lequel le premier diamètre extérieur (D2) du tube intérieur (2) est réduit par l'étirage conjoint.

6. Procédé selon l'une quelconque des revendications précédentes, **caractérisé en ce que** le tube intérieur (2) et le tube extérieur (3) consistent en le même matériau.

7. Procédé selon l'une quelconque des revendications précédentes, **caractérisé en ce que** le tube intérieur (2) et le tube extérieur (3) consistent en des matériaux différents.
